# EUROPÄISCHE PATENTSCHRIFT

(11) **EP 3 375 072 B1**
(45) Veröffentlichungstag und Bekanntmachung des Hinweises auf die Patenterteilung: **14.07.2021**
(21) Anmeldenummer: 16791423.3
(22) Anmeldetag: 08.11.2016
(51) Int. Cl.: H02K 3/12, H02K 3/28

(54) **ELEKTRISCHE MASCHINE MIT LEITERPLATTENANORDNUNG FÜR DIE WICKLUNGSVERSCHALTUNG UND ZUGEHÖRIGES HERSTELLUNGSVERFAHREN**
ELECTRICAL MACHINE COMPRISING A PRINTED CIRCUIT BOARD ARRANGEMENT FOR WINDING INTERCONNECTION AND ASSOCIATED PRODUCTION METHOD
MACHINE ÉLECTRIQUE COMPRENANT UN ENSEMBLE CARTE DE CIRCUITS IMPRIMÉS POUR LA CONNEXION D'UN ENROULEMENT ET PROCÉDÉ DE FABRICATION ASSOCIÉ

(30) Priorität: 09.11.2015 DE 102015221923
(43) Veröffentlichungstag der Anmeldung: 19.09.2018
(73) Patentinhaber: Vitesco Technologies GmbH, 30165 Hannover (DE)
(72) Erfinder: JASTER, Magnus, 14774 Kirchmöser (DE)
(86) Internationale Anmeldenummer: PCT/EP2016/076944
(87) Internationale Veröffentlichungsnummer: WO 2017/080985

(56) Entgegenhaltungen:
- EP-A1- 2 424 079
- DE-A1-102012 201 499
- DE-A1-102012 205 710
- KR-A- 20140 139 674
- US-A1- 2015 022 046

## Beschreibung

Die Erfindung betrifft eine elektrische Maschine mit einem Stator, der eine elektrische Wicklung aufweist, die aus elektrisch leitfähigen Stäben gebildet ist. Die elektrische Wicklung ist mit einer Wechselrichterschaltung über zumindest eine Leiterplattenanordnung elektrisch verbunden. Auch die Stäbe der Wicklung untereinander können paarweise über die Leiterplattenanordnung elektrisch verbunden sein. Zu der Erfindung gehört auch ein Verfahren zum Herstellen der elektrischen Maschine.

Die Wicklung eines Stators einer elektrischen Maschine wird in der Regel separat von der Inverterelektronik, das heißt der Wechselrichterschaltung, aus Drähten gefertigt und anschließend mit der Wechselrichterschaltung verbunden. Falls die Wicklung aus elektrisch leitfähigen Stäben gebildet ist (Stabwicklung), erfolgt das Verbinden der Phasenanschlüsse der Wicklung mit der Leiterplatine der Wechselrichterschaltung durch Steckverbindungen, Pressfit-Kontakte oder Hülsen in der Platine. Diese zusätzlichen Kontaktelemente werden mit dem jeweiligen Anschlussstab verschweißt oder verlötet. Somit wird die Aufnahme der mechanischen Kräfte durch diese separaten Bauteile erlangt, die hierzu aber aufwendig mit den Stäben der Wicklung verbunden werden müssen. Auch das Einbringen von Metallösen für die elektrische Anbindung ist ein aufwendiger, zusätzlicher Produktionsschritt, der mit Mehrkosten und Zeitaufwand verbunden ist.

Aus der DE 10 2012 201 499 A1 ist ein Verfahren zum Verbinden einer elektrischen Stromschiene mit einer Leiterplatte eines Leistungsschalters bekannt. Hierbei wird die Stromschiene mit der Leiterplatte mechanisch und elektrisch verbunden, indem sie durch eine Durchgangsöffnung in der Leiterplatte gesteckt wird. Je nach Durchmesser der Durchgangsöffnung ergibt sich hierbei ein Kraftschluss, welcher die Leiterplatte an der Stromschiene hält. Der Durchmesser der Öffnung muss aber an den Querschnitt der Stromschiene angepasst sein, damit die Stromschiene überhaupt durch die Öffnung passt.

Ein besonderes Problem ergibt sich hierbei, wenn die Stromschiene einen Querschnitt mit einer Rechteckform aufweist. Die Durchgangsöffnung in der Leiterplatte muss dann eine entsprechende Form aufweisen, was üblicherweise eine Ausfräsung erfordert, die einen separaten Produktionsschritt der Leiterplatte erfordert.

Die KR2014013967A beschreibt eine elektrische Maschine mit einem Stator, wobei innerhalb des Stators elektrisch leitfähige Stäbe in Nuten angeordnet sind. Die Enden der elektrischen Leiter sitzen im Presssitz in Öffnungen einer an den Stator angrenzenden Leiterplatte.

Die EP2424079A1 und die DE102012205710A1 beschreiben jeweils eine elektrische Maschine.

Der Erfindung liegt die Aufgabe zugrunde, eine elektrische Maschine bereitzustellen, die eine sichere elektrische Verschaltung mit einer Wechselrichterschaltung aufweist.

Die Aufgabe wird durch die Gegenstände der unabhängigen Patentansprüche gelöst. Vorteilhafte Weiterbildungen der Erfindung ergeben sich durch die abhängigen Patentansprüche, die folgende Beschreibung sowie den Figuren.

Durch die Erfindung ist eine elektrische Maschine bereitgestellt, die in bekannter Weise einen Stator mit einer elektrischen Wicklung und eine Wechselrichterschaltung aufweist. Die Wicklung weist elektrisch leitfähige Stromschienen oder Stäbe auf, welche in Nuten des Stators angeordnet sind und von denen jeder im Bereich der Nuten eine erste Querschnittsfläche aufweist. Jeder Stab kann beispielsweise als einzelner Draht ausgestaltet sein, der an einem vorderen axialen Ende und einem hinteren axialen Ende des Stators mit einem anderen Stab oder direkt mit der Wechselrichterschaltung elektrisch verschaltet ist. Es können auch zwei Stäbe durch einen U-förmig geformten Draht gebildet sein, sodass an einem axialen Ende keine zusätzlich elektrische Verschaltung der beiden Stäbe nötig ist. Die genannte axiale Richtung entspricht der bestimmungsgemäßen Rotationsachse eines im Stator angeordneten Rotors der elektrischen Maschine.

Die Wechselrichterschaltung, das heißt der Inverter, ist zum gesteuerten Bestromen der Wicklung eingerichtet, wie es an sich aus dem Stand der Technik bekannt ist. Die Wechselrichterschaltung ist hierbei mit den Stäben der Wicklung (direkt oder indirekt) über zumindest eine Leiterplattenanordnung elektrisch verbunden. Zusätzlich oder alternativ dazu ist vorgesehen, dass zumindest einige der Stäbe jeweils paarweise miteinander über die zumindest eine Leiterplattenanordnung elektrisch verbunden sind. Bei einer Leiterplattenanordnung kann es sich um eine Leiterplatte oder Platine (PCB - Printed Circuit Board) handeln, wie sie an sich aus dem Stand der Technik bekannt ist. Es kann sich z.B. um diejenige Leiterplatte, auf welcher auch elektronische Bauelemente der Wechselrichterschaltung angeordnet sind, oder eine separate oder zusätzliche Leiterplatte handeln. Im Zusammenhang mit der Erfindung ist unter einer Leiterplattenanordnung aber auch eine einzelne elektrisch leitfähige Platte, z.B. eine Kupferplatte, ohne ein zusätzliches elektrisch isolierendes Trägersubstrat zu verstehen. Ferner kann unter einer Leiterplattenanordnung auch eine gestapelte Anordnung mit mehreren der elektrisch leitfähigen Platten verstanden werden, die durch ein elektrisch isolierendes Medium, z.B. Luft oder eine oder mehrere Platten oder Schichten aus elektrisch isolierendem Material, getrennt sind.

Für die besagte Verbindung zwischen Wechselrichterschaltung und Wicklung weist die zumindest eine Leiterplattenanordnung Durchgangsbohrungen mit einem Durchmesser kleiner als eine maximale Abmessung der besagten ersten Querschnittsfläche der Stäbe auf. Durch jede Durchgangsbohrung ist jeweils ein Stabende eines der Stäbe hindurchgesteckt. Das hindurchgesteckte Stabende weist hierbei im Bereich der Durchgangsbohrung eine zweite Querschnittsfläche auf, die eine maximale Abmessung kleiner als der Durchmesser der Durchgangsbohrung oder gleich dem Durchmesser der Durchgangsbohrung ist. Zu beachten ist hierbei, dass sich daraus ergibt, dass das Stabende mit seiner zweiten Querschnittsfläche auch eine geringere Querschnittsfläche als der Stab im Bereich der Nuten aufweist, wo er die erste Querschnittsfläche aufweist. Ein Verhältnis der zweiten Querschnittsfläche zur ersten Querschnittsfläche beträgt beispielsweise weniger als 80 Prozent, insbesondere weniger als 70 Prozent. Die besagte maximale Abmessung ist bei einer rechteckigen oder quadratischen Querschnittsfläche jeweils die Länge der Diagonalen; bei einem kreisrunden Querschnitt ist es der Durchmesser. Des Weiteren ist zu beachten, dass mit Stabende hier ein fester Bestandteil des Stabes selbst gemeint ist. Das Stabende und der Stab sind also aus einem Stück gefertigt. Es handelt sich bei dem Stabende nicht um einen Aufsatz oder ein Zwischenstück. Stattdessen ist der Stab im Bereich des Stabendes verformt oder durch ein trennendes Verfahren in der Querschnittsfläche verringert. Die beschriebenen Querschnittsflächen beschreiben dabei die Größe der Schnittfläche senkrecht zur Längserstreckungsrichtung des jeweiligen Stabes. Die Platine weist als Durchgangsöffnungen Durchgangsbohrungen auf, das heißt es handelt sich um eine runde Form, insbesondere eine kreisrunde Durchgangsöffnung oder ein kreisrundes Loch.

Durch die Erfindung ergibt sich der Vorteil, dass die zumindest eine Leiterplattenanordnung in einem Standardprozess gefertigt werden kann, in welchem die Durchgangsbohrungen unabhängig von der Querschnittsfläche der Stäbe hergestellt werden können. Anders als im Stand der Technik wird nicht die Durchgangsbohrung an die Stäbe angepasst, sondern die Stäbe werden im Bereich ihrer Stabenden an die Durchgangsbohrung angepasst, indem die Stabenden mit der zweiten Querschnittsfläche bereitgestellt werden, die zum einen durch die Durchgangsbohrungen passt und zum anderen kleiner als die erste Querschnittsfläche im Bereich der Nuten ist.

Durch die Erfindung ergibt sich somit der Vorteil, dass auch Stäbe mit einer rechteckigen Querschnittsform im Bereich der Nuten ohne die beschriebenen Ausfräsungen durch kreisrunde Durchgangsbohrungen in der zumindest einen Leiterplattenanordnung hindurchgesteckt werden können, indem die Leiterenden der Stäbe entsprechend in ihrer Querschnittsfläche reduziert oder angepasst sind. Es sind auch keine aufwändigen Ausfräsungen oder zusätzlichen Bauteile nötig, um die Stäbe mit der zumindest einen Leiterplattenanordnung zu verbinden. Die Stäbe sind insbesondere ausgehend von den Nuten bis zu der jeweiligen Durchgangsbohrung gerade geformt. Somit lässt sich die zumindest eine Leiterplattenanordnung in axialer Richtung auf die Stäbe aufstecken.

Zu der Erfindung gehören auch optionale Weiterbildungen, durch deren Merkmale sich zusätzliche Vorteile ergeben.

Wie bereits ausgeführt, handelt es sich bei den Stabenden jeweils um einen Bestandteil eines der Stäbe. Um den Querschnitt jedes Stabendes zu formen, ist der jeweilige Stab durch ein trennendes Verfahren oder ein umformendes Verfahren auf die zweite Querschnittsfläche verjüngt. Beispielsweise kann ein Stab im Bereich des Stabendes gewalzt oder gestreckt worden sein. Als trennendes Verfahren kann vorgesehen sein, dass das Stabende durch Stanzen oder Fräsen erzeugt ist. Dies kann integraler Fertigungsschritt beim Herstellen der Stäbe sein, indem beispielsweise ein Draht zertrennt wird und beim Zertrennen zugleich auch die Stabenden ausgeformt werden, indem beispielsweise ein Stanzwerkzeug sowohl das Zertrennen als auch das Ausformen der Stabenden durchführt.

Eine Weiterbildung sieht vor, dass die Stäbe in den Nuten einen rechteckigen Querschnitt mit einer Langseite und einer Kurzseite aufweisen. Mit anderen Worten handelt es sich bei den Stäben um Drähte mit einem Querschnitt, der eine rechteckige Form aufweist, die aber nicht quadratisch ist. Stäbe dieser Art können aus einem Vierkantdraht hergestellt werden. Die Stabenden weisen dagegen im Bereich der Durchgangsbohrung einen quadratischen oder kreisrunden Querschnitt auf. Hierdurch ergibt sich der Vorteil, dass die Stabenden durch eine kreisrunde Durchgangsbohrung gesteckt sein können und sich hierbei ein zuverlässiger Kraftschluss und/oder eine zuverlässige elektrische Verbindung ergibt.

Erfindungsgemäß ist vorgesehen, dass zumindest einer der Stäbe gegabelt ausgestaltet ist. Mit anderen Worten weist der Stab mehrere Stabenden auf, von denen jedes durch eine der Durchgangsbohrungen gesteckt ist. Aus einem Draht mit rechteckig geformtem Querschnitt können also beispielsweise mehrere Stabenden mit quadratischem Querschnitt geformt sein. Hierdurch ergibt sich der Vorteil, dass der Stab mit einem ausreichend großen elektrisch leitfähigen Querschnitt an die zumindest eine Leiterplattenanordnung angeschlossen werden kann.

Bei der elektrischen Maschine kann vorgesehen sein, dass von jeder Phase der Wicklung (zum Beispiel Drei-Phasen-Wicklung oder Sechs-Phasen-Wicklung) pro Phase jeweils die Phasenanschlüsse in der beschriebenen Weise mit der zumindest einen Leiterplattenanordnung elektrisch verbunden sind. Dann sind zwei Stäbe pro Phase mit der zumindest einen Leiterplattenanordnung verbunden. Eine Weiterbildung sieht vor, dass zusätzlich die einzelnen Spulenschleifen oder Windungen der Wicklung über die zumindest eine Leiterplattenanordnung untereinander elektrisch verschaltet sind. Mit anderen Worten erfolgt das paarweise Verschalten jeweils zweier Stäbe durch die Leiterplattenanordnung. Bei dieser Weiterbildung weist die elektrische Wicklung also mehrere Windungen auf und einige oder alle Windungen sind untereinander mittels der zumindest einen Leiterplattenanordnung elektrisch verschaltet. Hierdurch können also jeweils zwei Stäbe paarweise in Serie geschaltet sein. Diese Weiterbildung weist den Vorteil auf, dass zum Bilden einer Wicklung die einzelnen Windungen nicht beispielsweise durch paarweises Verlöten der Stäbe gebildet werden müssen, sondern die Stäbe mit ihren Stabenden durch die Durchgangsbohrungen zumindest einer Leiterplattenanordnung gesteckt und über die zumindest eine Leiterplattenanordnung elektrisch verschaltet werden können. Dies spart insbesondere einen Biegeprozess, mittels welchem ansonsten die Stabenden der jeweils zu verbindenden Stäbe zusammengeführt werden müssten.

Einige Weiterbildungen der Erfindung betreffen die Möglichkeit, die Stäbe mit der zumindest einen Leiterplattenanordnung mechanisch zu verbinden.

Gemäß einer Weiterbildung sind zumindest einige der Stabenden von den Nuten aus gesehen jenseits der Durchgangsbohrung gekrümmt oder abgewinkelt. Mit anderen Worten sind diese Stabenden durch die Durchgangsbohrung durchgesteckt und dahinter abgeknickt oder umgebogen. Dies erzeugt einen zuverlässigen Formschluss, der das Abrutschen der zumindest einen Leiterplattenanordnung von den Stäben verhindert.

Eine Weiterbildung sieht vor, dass zumindest einige der Stabenden von den Nuten des Stators aus gesehen jenseits der Durchgangsbohrung eine dritte Querschnittsfläche aufweisen, die größer als die zweite Querschnittsfläche ist. Mit anderen Worten sind die Stabenden an ihrer durchgesteckten Seite jenseits der Durchgangsbohrung wieder verdickt. Dies kann durch Stauchen oder eine Materialaufwerfung des Materials der Stabenden bewirkt werden. Mit anderen Worten werden die Stabenden verpresst oder vernietet. Hierdurch ergibt sich der Vorteil, dass der so gebildete Formschluss keinen zusätzlichen Platzbedarf auf der zumindest einen Leiterplattenanordnung benötigt, wie dies bei einem Umbiegen der Leiterenden der Fall ist.

In Bezug auf das elektrische Verbinden der Stäbe mit der Wechselrichterschaltung oder der Stäben untereinander sieht eine Weiterbildung vor, dass zumindest einige der Stabenden mit einer elektrisch leitfähigen Außenlage der zumindest einen Leiterplattenanordnung verbunden sind. Beispielsweise können sie mit der Außenlage verschweißt oder verlötet sein. Die Außenlage kann als Kupferschicht bereitgestellt sein. Die Weiterbildung weist den Vorteil auf, dass die elektrische Verbindung durch Leiterbahnen auf der zumindest einen Leiterplattenanordnung definiert werden kann. Eine Weiterbildung sieht dagegen vor, dass zumindest einige der Stabenden mit einer auf der zumindest einen Leiterplattenanordnung angeordneten Stromschiene stoffschlüssig verbunden sind. Die Stromschiene ist insbesondere auf der Grundlage von SMD-Technik (SMD - Surface Mounted Device) auf der zumindest einen Leiterplattenanordnung aufgelötet. Die beschriebene stoffschlüssige Verbindung kann wieder durch Verschweißen oder Verlöten bereitgestellt sein. Diese Weiterbildung weist den Vorteil auf, dass der elektrisch leitfähige Querschnitt unabhängig von der Dicke der Außenlage der zumindest einen Leiterplattenanordnung durch die Wahl der Stromschiene festgelegt werden kann.

Zu der Erfindung gehört auch ein Verfahren zum Herstellen der erfindungsgemäßen elektrischen Maschine. Dieses Verfahren sieht vor, dass ein Draht mit einer ersten Querschnittsfläche bereitgestellt wird. Dieser Draht kann beispielsweise auf einer Rolle angeliefert oder bereitgestellt sein. Der Draht wird in Drahtstücke zertrennt, um hierdurch Stäbe für die elektrische Wicklung des Stators der elektrischen Maschine bereitzustellen. Ein Drahtstück kann hierbei einen einzelnen Stab darstellen oder zu einem U-förmigen Doppelstab gebogen werden. Um nun diese Drahtstücke, das heißt die Stäbe oder Doppelstäbe, mit zumindest einer Leiterplattenanordnung zum Verschalten mit der Wechselrichterschaltung zu verbinden, werden an zumindest einem Drahtende jedes Drahtstücks jeweils ein Stabende oder mehrere Stabenden erzeugt oder ausgebildet. Der Querschnitt jedes Stabendes weist dabei in der beschriebenen Weise eine zweite Querschnittsfläche auf, die kleiner als die erste Querschnittsfläche ist. Die Stabenden sind somit im Vergleich zu dem Querschnitt des ursprünglichen Drahtes verjüngt. Auf der zumindest einen Leiterplattenanordnung werden Durchgangsbohrungen erzeugt, wobei die Durchgangsbohrungen einen Durchmesser kleiner als die maximale Abmessung der ersten Querschnittsfläche aufweisen. Mit anderen Worten lässt sich der unbearbeitete Draht mit seiner ersten Querschnittsfläche nicht durch die Durchgangsbohrungen hindurchstecken. Stattdessen wird jeweils eines der Stabenden mit der zweiten Querschnittsfläche durch jeweils eine der Durchgangsbohrungen gesteckt. Hierdurch ergibt sich die beschriebene Verbindung zwischen den Stäben und der zumindest einen Leiterplattenanordnung.

Wie bereits ausgeführt, sind pro Drahtende mehrere Stabenden ausgebildet, sodass das Drahtende gegabelt ist. Jede Zinke der Gabel entspricht dabei einem Stabende. Dies weist den Vorteil auf, dass ein elektrisch leitfähiger Querschnitt im Bereich der Durchgangsbohrungen durch die Anzahl der Stabenden festgelegt werden kann.

Eine Weiterbildung des Verfahrens sieht vor, dass die Stabenden durch eine trennendes Verfahren, insbesondere ein Stanzverfahren oder Fräsen, erzeugt werden. Mittels des Stanzverfahrens können die Stabenden im selben Herstellungsschritt wie das Zertrennen des Drahtes durchgeführt werden. Ein trennendes Verfahren (Stanzen, Fräsen) weist den Vorteil auf, dass die überschüssige Querschnittsfläche, also die Differenz zwischen der ersten Querschnittsfläche und der zweiten Querschnittsfläche, tatsächlich entfernt wird und nicht durch Verformung an einer anderen Stelle des Stabes gestaucht ist.

Eine Weiterbildung sieht vor, dass die Stabenden durch ein umformendes Verfahren von der ersten Querschnittsfläche auf die zweite Querschnittsfläche verjüngt werden. Dies kann beispielsweise durch Auseinanderziehen erfolgen. Mit anderen Worten kann zum Zertrennen des Drahtes in die Drahtstücke der Draht zerrissen werden. Dies verjüngt automatisch den Querschnitt an der Rissstelle. Eine alternative Möglichkeit ist das Walzen der Drahtstücke, um hierdurch die Stabenden zu erzeugen. Die besagten Drahtstücke können an ihren Drahtenden auch durch einen Längsschnitt oder mehrere Längsschnitte in zwei oder mehr Stabenden aufgefächert oder aufgeteilt werden.

Eine Weiterbildung sieht vor, dass an einer Seite zumindest einer Durchgangsbohrung ein Führungselement angeordnet wird, beispielsweise ein Metallkörper mit einer Ausbuchtung. Es wird eines der Drahtenden von einer gegenüberliegenden anderen Seite der Durchgangsbohrung durch diese Durchgangsbohrung hindurchgesteckt und beim Durchstecken gegen das Führungselement gedrückt. Hierbei wird das Drahtende an dem Führungselement gebogen. Somit erhält man den beschriebenen Formschluss, bei welchem das Drahtende jenseits der Durchgangsbohrung gekrümmt oder geknickt ist.

Wie bereits ausgeführt, ist es auch möglich, zumindest eines der Stabenden nach dem Durchstecken zu biegen. Zusätzlich oder alternativ dazu kann vorgesehen sein, zumindest eines der Stabenden auf eine dritte Querschnittsfläche, die größer als die zweite Querschnittsfläche in der Durchgangsbohrung ist, zu stauchen. Hierdurch ergibt sich das beschriebene Vernieten der Stabenden an der zumindest einen Leiterplattenanordnung.

Zu der Erfindung gehören auch Weiterbildungen des erfindungsgemäßen Verfahrens, die Merkmale aufweisen, wie sie bereits im Zusammenhang mit den verbleibenden Weiterbildungen der erfindungsgemäßen elektrischen Maschine beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt:
- Fig. 1: eine schematische Darstellung einer Ausführungsform der erfindungsgemäßen elektrischen Maschine,
- Fig. 2: eine schematische Darstellung einer Seitenansicht eines Stabes einer elektrischen Wicklung der elektrischen Maschine von Fig. 1 mit mehreren gegabelten Stabenden,
- Fig. 3: eine schematische Darstellung eines Längsschnitts durch die elektrische Maschine, und
- Fig. 4: eine schematische Darstellung eines Formschlusses von Stabenden mit einer Leiterplattenanordnung der elektrischen Maschine.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

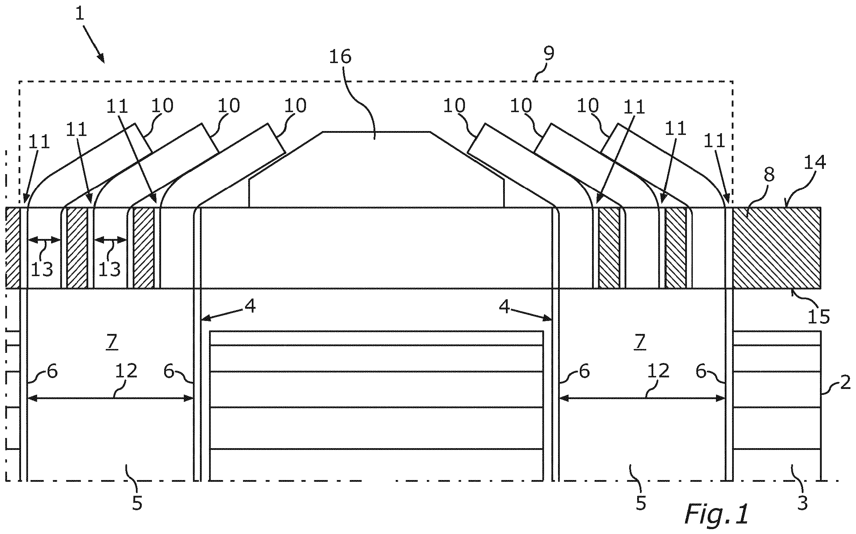

Fig. 1 zeigt eine elektrische Maschine 1, bei der es sich beispielsweise um einen elektrischen Starter oder einen elektrischen Starter-Generator für ein Kraftfahrzeug handeln kann. Dargestellt ist von einem Stator 2 dessen Blechpaket 3. Die an sich bekannte Laminierung des Blechpakets 3 ist in Fig. 1 durch waagerechte Linien symbolisch repräsentiert. In Nuten 4 des Stators 2 sind jeweils ein oder mehrere elektrisch leitfähige Leiterstäbe der (kurz-)Stäbe 5 angeordnet, die zusammen in an sich bekannter Weise eine elektrische Wicklung des Stators 2 bilden. Jeder Stab 5 kann eine elektrische Isolierung 6 aufweisen, durch welche ein elektrisch leitfähiges Material 7 des Stabes 5 gegen das Blechpaket 3 elektrisch isoliert ist. Die Stäbe 5 können beispielsweise aus Kupfer gebildet sein, die elektrische Isolierung 6 beispielsweise aus einem Polymer. Die Stäbe 5 sind massiv.

In Fig. 1 ist des Weiteren eine Leiterplattenanordnung 8 dargestellt. Bei der Leiterplattenanordnung 8 kann es sich in dem Beispiel z.B. um eine Platine (PCB - Printed Circuit Board) handeln. Auf der Leiterplattenanordnung 8 können beispielsweise elektronische Bauteile einer Wechselrichterschaltung 9 angeordnet sein. Die Wechselrichterschaltung 9 kann aber auch auf einer anderen Leiterplattenanordnung (nicht dargestellt) angeordnet sein.

Um die Stäbe 5 mit der Wechselrichterschaltung 9 zu verschalten, sind die Stäbe 5 direkt mit der Leiterplattenanordnung 8 verbunden. Hierzu weist jeder Stab 5 ein Stabende 10 oder mehrere Stabenden 10 auf, von denen jedes durch jeweils eine Durchgangsbohrung 11 der Leiterplattenanordnung 9 hindurchgesteckt ist. Jedes Stabende 10 steckt allein in einer anderen Durchgangsbohrung 11. Die Durchgangsbohrungen 11 können mit einem Bohrer gebohrt worden sein. Die Durchgangsöffnungen 11 können insbesondere einen kreisrunden Lochquerschnitt aufweisen.

Die Durchgangsbohrungen 11 weisen einen Durchmesser auf, der kleiner ist als eine maximale Abmessung 12 des jeweiligen Stabes 5 im Bereich der Nuten 4. Die Stabenden 10 weisen dagegen eine maximale Abmessung 13 auf, der kleiner oder gleich dem Durchmesser der jeweiligen Durchgangsbohrung 11 ist. Der Übersichtlichkeit halber sind nur einige Durchmesser 13 in Fig. 1 veranschaulicht.

Um die Stäbe 5 an der Leiterplattenanordnung 8 zu halten, sind die Stabenden 10 an einer jenseitigen Seite 14 gegenüber einer statorseitigen Seite 15 der Leiterplattenanordnung 8 gebogen oder gekrümmt. Um einen elektrischen Strom aus den Stäben 5 auf der Leiterplattenanordnung 8 leiten zu können, kann eine Stromschiene 16 auf der Leiterplattenanordnung angeordnet sein. Die in Fig. 1 veranschaulichte Anordnung kann zusätzlich auf der jenseitigen Seite 14 der Leiterplattenanordnung 8 verschweißt oder verlötet sein (nicht dargestellt), um hierdurch eine stoffschlüssige Verbindung zwischen den Stabenden 10 und der Stromschiene 16 bereitzustellen.

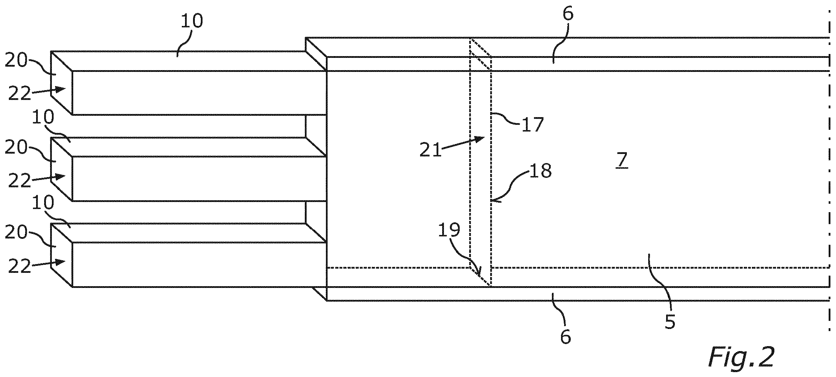

Fig. 2 veranschaulicht einen einzelnen Stab 5 mit mehreren Stabenden 10 am Ende des Stabes 5. Der Stab 5 weist hierdurch eine gegabelte Form auf. Der Stab 5 weist im Bereich der Nuten 4 einen Querschnitt 17 auf, der eine rechteckige Form mit einer Langseite 18 und einer Kurzseite 19 aufweist. Eine Abmessung der Langseite 18 kann beispielsweise in einem Bereich von 2 Millimeter bis 15 Millimeter liegen. Eine Abmessung der Kurzseite 19 kann in einem Bereich von 0,5 Millimeter bis 10 Millimeter liegen. Hierbei ist die Kurzseite 19 kleiner als die Langseite 18. Insbesondere ist die Kurzseite 19 höchstens halb so lang wie die Langseite 18. Die maximale Abmessung 12 entspricht der Länge der Diagonalen der rechteckigen Form.

Dagegen weisen die Stabenden 10 eine Querschnittsfläche 20 auf, die eine quadratische Form aufweist. Des Weiteren ist eine erste Querschnittsfläche 21 des Querschnitts 17 des Stabes 5 im Bereich der Nuten 4 größer als jede Querschnittsfläche 22 der Stabenden 10. Der Stab 5 kann aus einem Vierkantdraht gebildet sein, wobei zum Bilden der Stabenden 10 der Draht mittels eines Stanzwerkzeugs in einzelne Drahtstücke zerteilt worden sein kann und das Stanzwerkzeug beim Zertrennen zugleich die Stabenden 10 ausformt hat. Die maximale Abmessung 13 entspricht der Länge der Diagonalen der quadratischen Form.

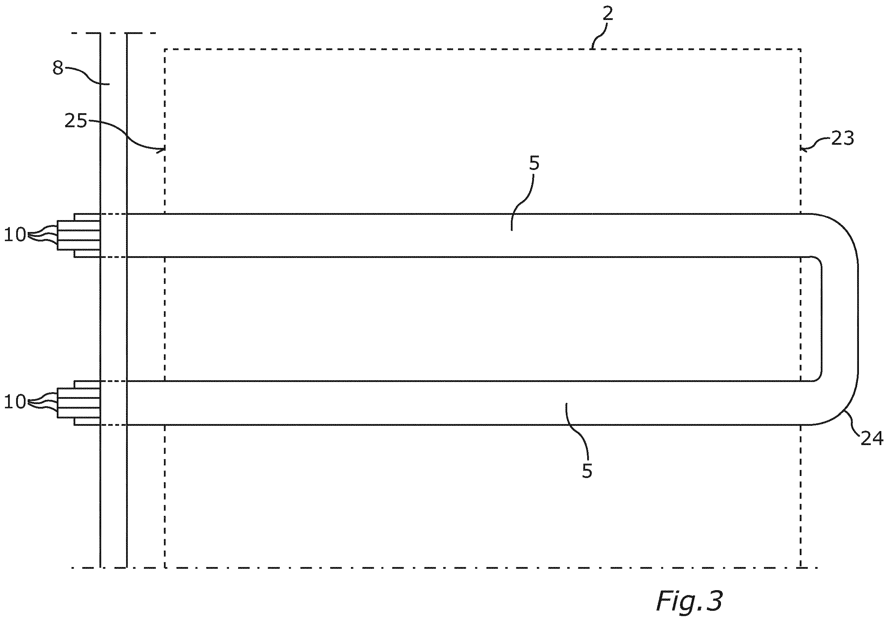

Zum Bilden einzelner Windungen oder Schlaufen der elektrischen Wicklung des Stators 2 müssen einzelne Stäbe 5 jeweils paarweise untereinander elektrisch verbunden sein. Fig. 3 zeigt hierzu, wie an einem axialen Ende 23 des Stators 2 zwei Stäbe 5 dadurch verbunden werden können, dass die beiden Stäbe 5 durch ein U-förmiges Drahtstück 24 gebildet sind, sodass sich an dem axialen Ende 23 hierdurch eine elektrische Verbindung der Stäbe 5 ergibt. An dem gegenüberliegenden axialen Ende 25 können die Stäbe 5 jeweils mit einem weiteren Stab (nicht dargestellt) durch die Leiterplattenanordnung 8 elektrisch verbunden sein. Es kann auch vorgesehen sein, dass die Stäbe 5 mit der Wechselrichterschaltung 9 direkt verschaltet sind.

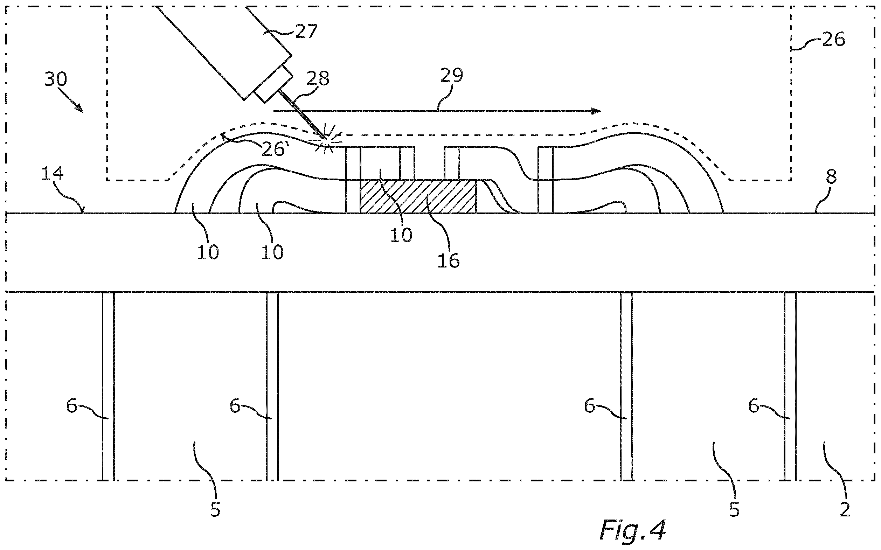

Fig. 4 veranschaulicht den Biegeprozess, wie er beispielsweise zum Herstellen der Verbindung gemäß Fig. 1 vorgesehen sein kann. Beim Durchstecken der Stabenden 10 durch die Durchgangsöffnungen 11 der Leiterplattenanordnung 8 kann auf der jenseitigen Seite 14 ein Führungselement 26 angeordnet sein, beispielsweise ein Metallkörper, gegen den die Stabenden 10 beim Durchstecken gedrückt werden. Durch eine gekrümmte Oberfläche 26' des Führungselements 26 werden die Stabenden 10 in eine gewünschte Richtung gebogen. Nach Entfernen des Führungselements 26 kann mit einem Laser 27 ein Laserstrahl 28 beispielsweise in einer Schwenkbewegung 29 über die Stabenden 10 und die Stromschiene 16 geführt werden und hierdurch das Material der Stabenden 10 mit dem Material der Stromschiene 16 verschweißt werden.

Die Leiterplattenanordnung 8 mit den verschalteten Stabenden 10 stellt insgesamt einen Wickelkopf 30 der Wicklung der elektrischen Maschine 1 dar. Dieser Wickelkopf 30 ist durch die beschriebene Anordnung besonders flach. Zum Verschalten der Stäbe 5 für die elektrische Wicklung sind zudem nur Leiterbahnen auf der Leiterplattenanordnung 8 nötig, sodass komplexe Biegeprozesse zum Zusammenführen der Stäbe 5 nicht nötig sind.

Insgesamt wird durch das Ausführungsbeispiel das folgende erfindungsgemäße Prinzip realisiert. Die Leiterplattenanordnung 8 hat eine oder mehrere Öffnungen, die kleiner sind als der Querschnitt der Stromschienen oder Stäbe 5. Durch eine Reduzierung des ursprünglichen Querschnitts 17 an den Stabenden 10 jedes Stabs 5 dienen die Stabenden 10 nach dem Durchstecken durch die Öffnungen bereits als Lager für die Leiterplattenanordnung 8. Auf der Gegenseite 14 werden die Stäbe 5 entweder mit der Leiterplattenanordnung 8 selbst oder mit einer zusätzlichen Stromschiene 16 elektrisch und mechanisch verbunden. Die beiden elektrisch leitfähigen Außenlagen, beispielsweise Kupferschichten der Leiterplattenanordnung 8, sind idealerweise in dem Bereich der Durchgangsbohrungen 11 elektrisch leitend und verbinden die Stabenden 10 mit einem oder mehreren Bauteilen auf der Leiterplattenanordnung 8 oder auch untereinander. Eine weitere Möglichkeit ist das Abwinkeln der Stabenden 10 (siehe Fig. 1), die aus der Leiterplattenanordnung 8 herausragen. Dies kann in der beschriebenen Weise (Fig. 4) während des Durchsteckens oder auch danach erfolgen. Somit entsteht ein Formschluss. Die Reduzierung des Querschnitts 17 im Bereich der Stabenden 10 im Verhältnis zu den Stäben 5 selbst ist idealerweise derart gestaltet, dass die resultierende durchzusteckende Form mindestens ein quadratisches oder rundes Element enthält. Somit wird bei der Leiterplattenfertigung auf eine Ausfräsung verzichtet, da stets runde, insbesondere kreisrunde, Bohrungen ausreichen, um die Stabenden 10 durchstecken zu können. Die im Querschnitt 17 rechteckigen Stäbe 5 können somit ohne rechteckige Ausfräsungen in der Leiterplattenanordnung 8 allein durch runde Bohrungen in der Leiterplattenanordnung 8 hindurchgesteckt und mit dieser verbunden werden. Ein zusätzliches Hülsenelement oder Zwischenelement mit Kraftschluss für die Durchkontaktierung ist nicht nötig. Es sind keine weiteren Bauteile auf der Leiterplattenanordnung 8 nötig, um einen Stab 5 mit der Leiterplattenanordnung 8 zu verbinden.

Das erfindungsgemäße Prinzip kann bei der elektrischen Maschine 1 somit überall dort verwendet werden, wo elektrisch leitfähige Stäbe, beispielsweise Stromschienen, mit Leistungselektronik in Verbindung gebracht werden müssen oder untereinander komplexere Verschaltungen von Stäben über die Leiterplattenanordnung bereitgestellt werden müssen.

Insgesamt zeigt das Beispiel, wie durch die Erfindung eine gegabelte Verbindung von Phasenanschlüssen einer Statorwicklung an einer Leiterplattenanordnung bereitgestellt werden kann.

### Bezugszeichenliste

- 1: Elektrische Maschine
- 2: Stator
- 3: Blechpaket
- 4: Nut
- 5: Stab
- 6: Isolierung
- 7: Material
- 8: Leiterplatte
- 9: Wechselrichterschaltung
- 10: Stabende
- 11: Durchgangsbohrung
- 12: maximale Abmessung
- 13: maximale Abmessung
- 14: Seite
- 15: Seite
- 16: Stromschiene
- 17: Querschnitt
- 18: Langseite
- 19: Kurzseite
- 20: Querschnitt
- 21: Erste Querschnittsfläche
- 22: Zweite Querschnittsfläche
- 23: Axiales Ende
- 24: U-förmiges Drahtstück
- 25: Axiales Ende
- 26: Führungselement
- 26': Gekrümmte Oberfläche
- 27: Laser
- 28: Laserstrahl
- 29: Schwenkbewegung
- 30: Wickelkopf

## Patentansprüche

1. Elektrische Maschine (1) aufweisend:
- einen Stator (2) mit einer elektrischen Wicklung, die elektrisch leitfähige Stäbe (5) aufweist, welche jeweils teilweise in Nuten (4) des Stators (2) angeordnet sind und von denen jeder im Bereich der Nuten (4) eine erste Querschnittsfläche (21) aufweist, und
- eine Wechselrichterschaltung (9) zum gesteuerten Bestromen der Wicklung, wobei die Wechselrichterschaltung (9) mit den Stäben der Wicklung und/oder zumindest einige der Stäbe paarweise miteinander über zumindest eine Leiterplattenanordnung (8) elektrisch verbunden sind, wobei
- die zumindest eine Leiterplattenanordnung (8) Durchgangsbohrungen (11) mit einem Durchmesser kleiner als eine maximale Abmessung (12) der ersten Querschnittsfläche (21) aufweist und
- durch jede Durchgangsbohrung (11) jeweils ein Stabende (10) eines der Stäbe (5) hindurch gesteckt ist,
**dadurch gekennzeichnet, dass**
zumindest einer der Stäbe (5) gegabelt ausgestaltet ist und hierdurch mehrere Stabenden (10) aufweist, von denen jedes durch eine der Durchgangsbohrungen (11) gesteckt ist, und das hindurchgesteckte Stabende (10) im Bereich der Durchgangsbohrung (11) eine zweite Querschnittsfläche (22) aufweist, die eine maximale Abmessung (13) kleiner als der Durchmesser der Durchgangsbohrung (11) oder gleich dem Durchmesser der Durchgangsbohrung (11) aufweist.

2. Elektrische Maschine (1) nach Anspruch 1, wobei die Stäbe (5) in den Nuten (4) einen rechteckigen Querschnitt (17) mit einer Langseite (18) und einer Kurzseite (19) aufweisen und die Stabenden (10) im Bereich der Durchgangsbohrung (11) einen quadratischen Querschnitt (20) oder kreisrunden Querschnitt aufweisen.

3. Elektrische Maschine (1) nach einem der vorhergehenden Ansprüche, wobei die elektrische Wicklung mehrere Windungen aufweist und einige oder alle Windungen untereinander mittels der zumindest eine Leiterplattenanordnung (8) elektrisch verschaltet sind.

4. Elektrische Maschine (1) nach einem der vorhergehenden Ansprüche, wobei zumindest einige der Stabenden (10) von den Nuten (4) aus gesehen jenseits (14) der Durchgangsbohrung (11) gekrümmt oder abgewinkelt sind.

5. Elektrische Maschine (1) nach einem der vorhergehenden Ansprüche, wobei zumindest einige der Stabenden (10) von den Nuten (4) aus gesehen jenseits (14) der Durchgangsbohrung (11) eine dritte Querschnittsfläche aufweisen, die größer als die zweite Querschnittsfläche (22) ist.

6. Elektrische Maschine (1) nach einem der vorhergehenden Ansprüche, wobei zumindest einige der Stabenden (10) mit einer elektrisch leitfähigen Außenlage der zumindest einen Leiterplattenanordnung (8) und/oder mit einer auf der zumindest einen Leiterplattenanordnung (8) angeordneten Stromschiene (16) stoffschlüssig verbunden sind.

7. Verfahren zum Herstellen einer elektrischen Maschine (1) nach einem der vorhergehenden Ansprüche, mit den Schritten:
- Bereitstellen eines Drahtes, der im Querschnitt eine erste Querschnittsfläche (21) aufweist,
- Zertrennen des Drahtes in Drahtstücke (24) zum Bereitstellen von Stäben (5) für eine elektrische Wicklung eines Stators (2) der elektrischen Maschine (1),
- an zumindest einem Drahtende jedes Drahtstücks (25) Ausbilden von mehreren Stabenden (10), so dass das Drahtende gegabelt ist, wobei der Querschnitt (20) jedes Stabendes (10) eine zweite Querschnittsfläche (22) kleiner als die erste Querschnittsfläche (21) aufweist,
- Erzeugen von Durchgangsbohrungen (11) in zumindest einer Leiterplattenanordnung (8), wobei die Durchgangbohrungen (11) einen Durchmesser kleiner als eine maximale Abmessung (12) der ersten Querschnittsfläche (21) aufweisen,
- Durchstecken jeweils eines Stabendes (10) durch jeweils eine der Durchgangsbohrungen (11).

8. Verfahren nach Anspruch 7, wobei die Stabenden (10) durch ein trennendes Verfahren, insbesondere Stanzverfahren oder Fräsen, erzeugt werden.

9. Verfahren nach Anspruch 7 oder 8, wobei zum Erzeugen der Stabenden (10) das jeweilige Drahtende jedes Drahtstücks durch ein umformendes Verfahren von der ersten Querschnittsfläche (21) auf die zweite Querschnittsfläche (22) verjüngt wird.

10. Verfahren nach einem der Ansprüche 7 bis 9, wobei an einer Seite (14) zumindest einer Durchgangsbohrung (11) ein Führungselement (26) angeordnet wird, ein Drahtende (10) von einer gegenüberliegenden anderen Seite (15) der Durchgangsbohrung (11) durch diese gesteckt und beim Durchstecken gegen das Führungselement (26) gedrückt und hierdurch gebogen wird.

11. Verfahren nach einem der Ansprüche 7 bis 10, wobei zumindest eines der Stabenden (10) nach dem Durchstecken gebogen und/oder auf eine dritte Querschnittsfläche, die größer als die zweite Querschnittsfläche (22) ist, gestaucht wird.

## Claims

1. Electric machine (1) having:
- a stator (2) with an electrical winding which has electrically conductive bars (5) which are in each case arranged partially in grooves (4) of the stator (2) and each of which has a first cross-sectional area (21) in the region of the grooves (4), and
- an inverter circuit (9) for the controlled electrical energization of the winding, wherein the inverter circuit (9) is electrically connected to the bars of the winding, and/or at least some of the bars are electrically connected in pairwise fashion to one another, by means of at least one circuit board arrangement (8), wherein
- the at least one circuit board arrangement (8) has passage bores (11) with a diameter smaller than a maximum dimension (12) of the first cross-sectional area (21), and
- in each case one bar end (10) of one of the bars (5) is plugged through each passage bore (11),
**characterized in that**
at least one of the bars (5) is of forked design and thus has multiple bar ends (10), each of which is plugged through one of the passage bores (11), and the plugged-through bar end (10) has, in the region of the passage bore (11), a second cross-sectional area (22) which has a maximum dimension (13) smaller than the diameter of the passage bore (11) or equal to the diameter of the passage bore (11).

2. Electric machine (1) according to Claim 1, wherein the bars (5) have, in the grooves (4), a rectangular cross section (17) with a long side (18) and a short side (19), and the bar ends (10) have, in the region of the passage bore (11), a square cross section (20) or circular cross section.

3. Electric machine (1) according to any one of the preceding claims, wherein the electrical winding has multiple coils, and some or all of the coils are electrically interconnected with one another by means of the at least one circuit board arrangement (8).

4. Electric machine (1) according to any one of the preceding claims, wherein at least some of the bar ends (10) are curved or angled on the opposite side (14) of the passage bore (11) as viewed from the grooves (4).

5. Electric machine (1) according to any one of the preceding claims, wherein at least some of the bar ends (10) have a third cross-sectional area, which is larger than the second cross-sectional area (22), on the opposite side (14) of the passage bore (11) as viewed from the grooves (4).

6. Electric machine (1) according to any one of the preceding claims, wherein at least some of the bar ends (10) are cohesively connected to an electrically conductive outer layer of the at least one circuit board arrangement (8) and/or to a bus rail (16) arranged on the at least one circuit board arrangement (8).

7. Method for producing an electric machine (1) according to any one of the preceding claims, having the steps of:
- providing a wire which, in cross section, has a first cross-sectional area (21),
- severing the wire into wire pieces (24) in order to provide bars (5) for an electrical winding of a stator (2) of the electric machine (1),
- on at least one wire end of each wire piece (25), forming multiple bar ends (10), such that the wire end is forked, wherein the cross section (20) of each bar end (10) has a second cross-sectional area (22) smaller than the first cross-sectional area (21),
- producing passage bores (11) in at least one circuit board arrangement (8), wherein the passage bores (11) have a diameter smaller than a maximum dimension (12) of the first cross-sectional area (21),
- plugging in each case one bar end (10) through in each case one of the passage bores (11).

8. Method according to Claim 7, wherein the bar ends (10) are produced by means of a severing process, in particular a punching process or milling.

9. Method according to Claim 7 or 8, wherein, to produce the bar ends (10), the respective wire end of each wire piece is narrowed from the first cross-sectional area (21) to the second cross-sectional area (22) by means of a deformation process.

10. Method according to any one of Claims 7 to 9, wherein a guide element (26) is arranged on one side (14) of at least one passage bore (11), a wire end (10) is plugged through the passage bore (11) from an oppositely situated other side (15) of said passage bore, and said wire end is pressed against the guide element (26), and thereby bent, during the plugging-through process.

11. Method according to any one of Claims 7 to 10, wherein at least one of the bar ends (10) is, after the plugging-through process, bent and/or upset to a third cross-sectional area which is larger than the second cross-sectional area (22).

## Revendications

1. Machine électrique (1), comprenant :
- un stator (2) pourvu d'un enroulement électrique, qui possède des barres (5) électriquement conductrices, lesquelles sont respectivement disposées partiellement dans des rainures (4) du stator (2) et parmi lesquelles chacune présente une première surface de section transversale (21) dans la zone des rainures (4), et
- un circuit onduleur (9) destiné à l'alimentation électrique commandée de l'enroulement, le circuit onduleur (9) étant relié électriquement aux barres de l'enroulement et/ou au moins certaines des barres étant reliées électriquement entre elles par paires par le biais d'au moins un arrangement de circuit imprimé (8),
- l'au moins un arrangement de circuit imprimé (8) possédant des trous traversants (11) ayant un diamètre qui est plus petit qu'une dimension maximale (12) de la première surface de section transversale (21) et
- une extrémité de barre (10) de l'une des barres (5) étant respectivement enfichée à travers chaque trou traversant (11),
**caractérisée en ce que**
au moins l'une des barres (5) est de configuration fourchue et possède de ce fait plusieurs extrémités de barre (10), chacune étant enfichée à travers l'un des trous traversants (11), et l'extrémité de barre (10) enfichée présente, dans la zone du trou traversant (11), une deuxième surface de section transversale (22) qui présente une dimension maximale (13) plus petite que le diamètre du trou traversant (11) ou égale au diamètre du trou traversant (11).

2. Machine électrique (1) selon la revendication 1, les barres (5) dans les rainures (4) présentant une section transversale rectangulaire (17) avec un côté long (18) et un côté court (19) et les extrémités de barre (10) dans la zone du trou traversant (11) présentant une section transversale carrée (20) ou une section transversale circulaire ronde.

3. Machine électrique (1) selon l'une des revendications précédentes, l'enroulement électrique possédant plusieurs spires et certaines des spires ou toutes les spires étant connectées entre elles au moyen de l'au moins un arrangement de circuit imprimé (8).

4. Machine électrique (1) selon l'une des revendications précédentes, au moins certaines des extrémités de barre (10), vues depuis les rainures (4), étant courbées ou coudées de chaque côté (14) du trou traversant (11).

5. Machine électrique (1) selon l'une des revendications précédentes, au moins certaines des extrémités de barre (10), vues depuis les rainures (4), présentant de chaque côté (14) du trou traversant (11) une troisième surface de section transversale qui est plus grande que la deuxième surface de section transversale (22).

6. Machine électrique (1) selon l'une des revendications précédentes, au moins certaines des extrémités de barre (10) étant reliées par fusion de matières à une couche externe électriquement conductrice de l'au moins un arrangement de circuit imprimé (8) et/ou à une barre-bus (16) disposée sur l'au moins un arrangement de circuit imprimé (8).

7. Procédé de fabrication d'une machine électrique (1) selon l'une des revendications précédentes, comprenant les étapes suivantes :
- fourniture d'un fil, qui présente en section transversale une première surface de section transversale (21),
- séparation du fil en morceaux de fil (24) en vue de fournir des barres (5) pour un enroulement électrique d'un stator (2) de la machine électrique (1),
- au niveau d'au moins une extrémité de fil de chaque morceau de fil (25), formation de plusieurs extrémités de barre (10), de sorte que l'extrémité de fil soit fourchue, la section transversale (20) de chaque extrémité de barre (10) présentant une deuxième surface de section transversale (22) qui est plus petite que la première surface de section transversale (21),
- production de trous traversants (11) dans au moins un arrangement de circuit imprimé (8), les trous traversants (11) présentant un diamètre qui est plus petit qu'une dimension maximale (12) de la première surface de section transversale (21),
- enfichage respectivement d'une extrémité de barre (10) à travers respectivement l'un des trous traversants (11) .

8. Procédé selon la revendication 7, les extrémités de barre (10) étant produites par un procédé de séparation, notamment un procédé de découpage ou le fraisage.

9. Procédé selon la revendication 7 ou 8, en vue de produire les extrémités de barre (10), l'extrémité de fil respective de chaque morceau de fil étant effilée de la première surface de section transversale (21) à la deuxième surface de section transversale (22) par un procédé de façonnage.

10. Procédé selon l'une des revendications 7 à 9, un élément de guidage (26) étant disposé d'un côté (14) d'au moins un trou traversant (11), une extrémité de fil (10) étant enfichée à travers celui-ci depuis un autre côté (15) opposé du trou traversant (11) et poussée contre l'élément de guidage (26) lors de l'enfichage et, de ce fait, courbée.

11. Procédé selon l'une des revendications 7 à 10, au moins l'une des extrémités de barre (10) étant, après l'enfichage, courbée et/ou refoulée à une troisième surface de section transversale qui est plus grande que la deuxième surface de section transversale (22).
